# EUROPÄISCHE PATENTSCHRIFT

(11) **EP 1 284 244 B1**
(45) Veröffentlichungstag und Bekanntmachung des Hinweises auf die Patenterteilung: **26.04.2006**
(21) Anmeldenummer: 02018058.4
(22) Anmeldetag: 13.08.2002
(51) Int. Cl.: C03B 11/12, C03B 19/14, C03B 32/00

(54) **Quarzglasplatte sowie Verfahren und Vorrichtung zur Herstellung von optischen Bauteilen**
Quartz glass plate as well as process and apparatus for manufacturing optical elements
Feuille en verre de silice ainsi que procédé et appareil pour la fabrication d'éléments optiques

(30) Priorität: 15.08.2001 DE 10139905
(43) Veröffentlichungstag der Anmeldung: 19.02.2003
(73) Patentinhaber: Schott AG, 55122 Mainz (DE)
(72) Erfinder: Menzel, Andreas, 07745 Jena (DE); Elsmann, Frank, 07751 Grosslöbichau (DE); Schönherr, Norman, 07743 Jena (DE)
(74) Vertreter: Bock, Gerhard

(56) Entgegenhaltungen:
- EP-A- 1 069 084
- DE-B- 1 062 897
- US-A- 4 358 306
- US-A- 6 143 676
- PATENT ABSTRACTS OF JAPAN vol. 010, no. 258 (C-370), 4. September 1986 (1986-09-04) -& JP 61 083638 A (ASAHI GLASS CO LTD), 28. April 1986 (1986-04-28)
- PATENT ABSTRACTS OF JAPAN vol. 2000, no. 12, 3. Januar 2001 (2001-01-03) & JP 2000 247654 A (SUMITOMO HEAVY IND LTD), 12. September 2000 (2000-09-12)

## Beschreibung

Die Erfindung betrifft eine Vorrichtung zur Herstellung von großvolumigen optischen Bauteilen hoher optischer Qualität aus synthetischen Quarzglasrohlingen, gemäß der Gattung der Patentansprüche.

Bekanntlich ist zur Erzeugung von Quarzglasteilen großer Dimension oder guter Brechzahlhomogenität über große Bereiche eine Warmumforrnung von Quarzglasrohlingen geringerer Abmessungen notwendig. Dabei werden in Formen mit größerer Dimension eingesetzte Quarzglasrohlinge in Öfen eine bestimmte Zeit Temperaturen von ca. 200 K über dem Softening Point (Softening Temperature ≈ 1600°C) ausgesetzt. Dadurch erfolgt ein Ausfließen der Quarzglasrohlinge in eine Form, deren Innenkontur der gewünschten neuen Außenkontur der umgeforrnten Quarzglasteile entspricht. Je nach Ausgangs- und Zielgeometrie kann eine Umformung in bis zu drei aufeinanderfolgenden Schritten notwendig sein. Dadurch erfolgt vor allem in den oberflächennahen Bereichen der Quarzglasteile eine starke Veränderung der Brechzahlhomogenität, der Transmission und der Fluoreszenz sowie des H₂-Gehaltes, welche sich in ihrer Wirkung und Eindringtiefe in Abhängigkeit der Prozessparameter und Prozessschritte verstärken. Weiterhin treten relativ häufig lokale Störungen in der optischen Homogenität in Erscheinung, die nachteilige Auswirkung auf den Gradienten oder auf Resthomogenitäten des Brechzahlverlaufes gemäß den Spezifikationen für abbildende Systeme haben. Insbesondere sind aus der EP A 1069084 ein Verfahren und eine Vorrichtung zur Formung von Quarzglas bekannt, bei denen Blasen aus dem Quarzglas entfernt werden sollen und bei denen eine Form mit einem elastischen, gasdurchlässigen Material ausgelegt ist und bei denen eine Umformung in einem Temperaturbereich von 1750 bis 1850°C erfolgt. Außerdem sind aus den Patent Abstracts of Japan, vol. 010, no 258 und JP-A-61083638 sowie der US-A-4358306 Verfahren bzw. Vorrichtungen zur Umformung von Quarzglaskörpern bekannt, bei denen die in Formen befindlichen Quarzglaskörper auf 1600 - 1700°C erhitzt und an ihrer Oberseite mit einem Druck beaufschlagt werden. Die hierzu erforderlichen Druckkörper befinden sich zumindest teilweise innerhalb der Form und werden durch deren Seitenwände geführt. Den genannten Verfahren und Vorrichtungen haften jedoch die Mängel an, dass
- für jede Formkörpergeometrie eine entsprechende Druckkörpergeometrie vorhanden sein muss,
- die Druckkörperhöhe, insbesondere bei kleinen Formkörpern, erheblich, störend und der Stabilität der Anordnung abträglich ist,
- ein zwischen dem Druckkörper und dem Formkörper notwendig vorhandenes, temperaturabhängiges Spiel zu Verklemmungen und Verkippungen des Druckkörpers im Formkörpers führen kann, die Blockierungen und Beschädignugen der gesamten Anordnung zur Folge haben können.

Eine aus der DE-A-1062897 bekannte Mehrfachpressform für gestochene Glasperlen ist zur Herstellung von großvolumigen optischen Bauteilen hoher optischer Qualität nicht verwendbar.

Eine Vorrichtung und ein Verfahren zur Herstellung von synthetischem Quarzglas für UV-Strahlen ist in der US-A-6143676 offenbart. Ein als Rohling vorliegender, vorwiegend nach dem Soot-Verfahren gefertigter Quarzglaszylinder wird an seiner Aufschnittstelle erhitzt, als Platte gezogen und gewünschte Plattenstücke abgeschnitten. Abgesehen davon, dass dieses Herstellungsverfahren umständlich ist, erfordert es in Abhängigkeit vom Anwendungsfall weitere Umformungen und Bearbeitungen.

Der Erfindung liegt die Aufgabe zu Grunde, eine sicher wirkende Vorrichtung zur Herstellung von großvolumigen optischen Bauteilen hoher optischer Qualität aus synthetischen Quarzglasrohlingen zu schaffen, die eine gute Einsatzmassenausbeute zeigt und für das Quarzglas schonend ist. Insbesondere sollen im Umformungsprozess der H₂-Gehalt nicht verringert sowie eine Reduzierung des Energieeintrags und ein vollständiges Ausfüllen der Form ermöglicht werden.

Gemäß der Erfindung wird diese Aufgabe durch die Merkmale des ersten Patentanspruchs gelöst und durch die Merkmale der Unteransprüche präzisiert. Durch die Reduzierung der Aufheiztemperatur, insbesondere um 30 bis 150 K gegenüber dem zum Stand der Technik gehörenden Prozess, wird nicht nur der erforderliche Energieeintrag verringert (bis zu 25 kWh je Zyklus), sondern es werden auch der H₂-Gehalt besser eingehalten sowie die Brechzahlhomogenität, die UV-Transmission, das Fluoreszenzverhalten weniger verändert als bei den bekannten Verfahren. Dadurch ergeben sich kleinere Randbereiche am umgeformten optischen Bauteil als Abfall. Der auf den Quarzglasrohling ausgeübte Druck ermöglicht die geringere Aufheiztemperatur, kürzere Heizzeiten bzw. Prozesszeiten und ein besseres Ausfließen des Quarzglasrohlings in die Bauteilform (Senkform), so dass auch die Ecken der Senkform satt ausgefüllt sind.

Auch wird die Aufheizeinrichtung einschließlich des Ofens weniger thermisch belastet.

Eine vorteilhafte Lösung ergibt sich, wenn die Erhitzungstemperatur 20 bis 90 min gehalten wird, wobei zwischen der Stärke des Druckes und der Dauer der Haltetemperatur eine indirekte Proportionalität besteht. Die Aufheizung des Quarzglasrohlings vor der Druckbeaufschlagung kann mit 1 bis 50 K/min erfolgen. Die Abkühlung des geformten Quarzglaskörpers erfolgt vorteilhaft mit einer Kühlrate von 50 K/min oder ggf. bedeutend weniger, bis zu Bruchteilen von Minuten. Die Druckvorrichtung befindet sich in einer Ausführungsform im Ofen mit Schutzgasatmosphäre (Stickstoff, Argon). Sie weist eine im Wesentlichen parallel zur oberen Deckfläche des Quarzglasrohlings gerichtete Druckplatte auf, die auf die Deckfläche drückt und deren Druck veränderbar sein kann. Sie kann auch gekrümmt sein und vorzugsweise aus Grafit bestehen. Eine einfache Lösung enthält eine Druckplatte, die mittels Buchsen auf mindestens zwei, vorzugsweise drei oder vier Grafitständern straff geführt wird und deren Gewicht als äußere Kraft auf den Quarzglasrohling wirkt. An Stelle der Gewichte können auch Druckfedern Verwendung finden. Der Druck kann auch durch andere, innerhalb oder außerhalb des Ofens befindliche, mechanische, hydraulische und/oder pneumatische Vorrichtungen erzeugt und durch geeignete Kopplungsmittel, beispielsweise Stangen, auf die Druckplatte übertragen werden. Ebenso wie die Druckplatte kann die innere Bodenfläche der Senkform konkav oder konvex gekrümmt sein. Schließlich ist es möglich in einer Druckvorrichtung mehrere Quarzglasrohlinge in mehreren, ggf. unterschiedlichen Senkformen zu bearbeiten.

Ein durch die vorstehend beschriebenen erfindungsgemäßen Mittel hergestelltes optisches Bauteil (Quarzglasplatte) zeichnet sich durch Kantenlängen bzw. Durchmesser von mindestens 500 mm aus.

Die Erfindung wird nachstehend an Hand der schematischen Zeichnung eines Ausführungsbeispiels näher erläutert.

In einem geeignet geformten Ofen 1 mit Inertgasatmosphäre befinden sich zwei Senkformen 2, 3, die vorzugsweise aus Grafit bestehen und die gewünschten Dimensionen und Innenkonturen aufweisen. Die Senkformen können rund oder rechteckig sein und ebene oder gekrümmte Innenflächen aufweisen. Ihre seitlichen Dimensionen können bis 1000 x 600 mm betragen.

In die Senkformen 2, 3 sind mittig Quarzglasrohlinge 4, 5 eingesetzt, die unter Berücksichtigung des späteren Verwendungszwecks durch vorhergehende Bearbeitungsschritte (mechanisch oder durch thermische Umformung) zylindrisch oder quaderförmig gestaltet sein können.

Die Senkformen 2, 3 werden mit den Quarzglasrohlingen 4, 5 auf eine Grundplatte 6 einer Druckvorrichtung 7 aufgesetzt. Eine Druckplatte 8, die durch Führungsständer 9, 10 oder andere geeignete Führungsmittel exakt parallel geführt wird, wird auf die oberen Deckflächen 11, 12 der Quarzglasrohlinge 4, 5 aufgesetzt. Die untere Druckfläche 13 der Druckplatte 8 kann grundsätzlich eben, konkav oder konvex geformt sein. Auf die Druckplatte 8 wird ein variables Druckgewicht 14 aufgelegt. Anstatt des Druckgewichtes 14 kann der Druck auch von einem außen befindlichen Druckmittel 19 auf die Druckplatte 8 mittels Stangen oder anderen Verbindungsmitteln 15, 16 geführt werden. Das Druckgewicht 14 bzw. das Druckmittel 19 kann mechanischer, hydraulischer und/oder pneumatrischer Art sein.

Das Druckgewicht 14 wird so gewählt, dass der auf die Quarzglasrohlinge 4, 5 wirkende Druck zwischen 10 kPa und 500 kPa, beispielsweise bei 100 kPa, liegt.

Das Aufheizen des Ofens 1 und damit der Quarzglasrohlinge 4, 5 erfolgt mit Heizungen 17, 18 mit einer Heizrate von 1 bis 50 K/min, bspw. 10 K/min. In der Umformphase wird die Temperatur je nach den benutzten Senkformen 2, 3 und Quarzglasrohlingen 4, 5 gegenüber dem Softening Point (Erweichungspunkt) bei 1600°C um 50 bis 170 K, bspw. 70 K, geringfügig angehoben bzw. gegenüber dem zum Stand der Technik gehörenden Standardsenkverfahren um 30 - 150 K abgesenkt. Durch den auferlegten Druck kann die Verweilzeit während der Umformphase zusätzlich um 20 bis 60 min gegenüber dem technischen Stand verkürzt werden, bzw. auf nur 20 bis 90 min, bspw. 30 min, verkürzt werden.

Die Abkühlung des gepressten Quarzglaskörpers erfolgt mit einer Kühlrate von vorzugsweise kleiner 50 K/min, bspw. 5 K/min; dabei sind verschiedene Kühlperioden mit unterschiedlicher Kühlrate möglich.

Nach dem Abkühlen wird die Vorrichtung 7 aus dem Ofen 1 entnommen und die umgeformten Quarzglaskörper aus den Senkformen 2, 3 entnommen.

Durch die Anwendung der Druckvorrichtung wird selbst bei sehr großen Dimensionen (z. B. 600 x 600 mm) ein vollständiges Ausfüllen der Senkform mit dem Quarzglas erzielt.

Rechteckige Senkformen werden vollständig bis in die Ecken ausgefüllt. Die Ausbildung z. B. plan-konvexer Quarzkörper ist realisierbar.

Durch das vollständige Ausfüllen der Senkformen unabhängig von der Formgeometrie erhöht sich die Ausbeute der Einsatzmasse.

Durch die Absenkung der Temperatur in der Umformphase um 30 - 150 K und die gleichzeitige Verkürzung der Umformphase um 20 bis 90 min wird die thermische Belastung des Quarzglases deutlich verringert. Das führt dazu, dass die Veränderungen der Brechzahlhomogenität, der Transmission und der Fluoreszenz sowie des H₂-Gehaltes nur in einem deutlich kleinerem oberflächennahem Bereich erfolgt.

Die notwendige Abarbeitung der Außenflächen des umgeformten Quarzteiles kann daher um bis zu 10 mm verringert werden, was je nach Quarzteil einem Gewinn an Einsatzmassenausbeute um bis zu 30% bedeutet.

Durch den auferlegten Druck der von den Säulen 9, 10 parallel geführten Druckplatte 8 erfolgt eine starre Führung der Quarzglaskörper in der Umformphase. Abweichungen von der Symmetrie während der Umformphase werden verhindert. Das führt z. B. zu einer symmetrischeren Brechzahlverteilung im umgeformten Quarzglasteil, was z. B. eine Verringerung von Brechzahlgradienten bedingt.

Anwendungsgebiete dieser Erfindung sind alle Umformungen für Produktserien, die erhöhte Anforderungen bzgl. Homogenität, Transmission 193 nm, Fluoreszenz und Laserdamagestabilität haben. Dazu gehören:
- Halbzeuge aus synthetischem Quarzglas zur Herstellung von Projektionssystemen für 248 nm Anwendungen,
- Beleuchtungssystem für 193 nm Anwendungen,
- Projektonssystem für 193 nm Anwendungen,
- homogene Großplatten (wegen großer Fließwege),
- Substratblöcke, insbesondere ArF-Grade,
- Halbzeuge mit vorgeformten Oberflächenkonturen.

### Bezugszeichenliste

- 1: Ofen
- 2, 3: Senkformen, Bauteilformen
- 4,5: Quarzglasrohlinge
- 6: Grundplatte
- 7: Druckvorrichtung
- 8: Druckplatte
- 9, 10: Führungsständer
- 11, 12: obere Deckflächen
- 13: untere Druckfläche
- 14, 19: Druckgewicht , Druckmittel
- 15, 16: Stangen
- 17, 18: Heizungen

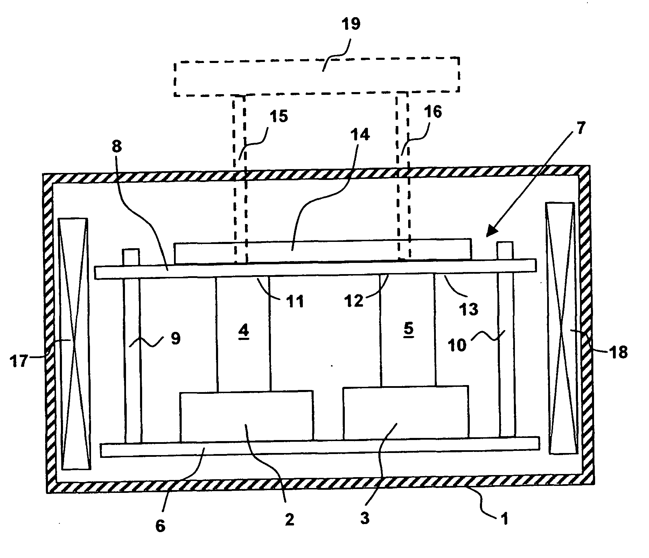

## Patentansprüche

1. Vorrichtung zur Herstellung von großvolumigen optischen Bauteilen hoher optischer Qualität aus synthetischen Quarzglasrohlingen, bei der in einem Ofen (1) mit Schutzgasatmosphäre mindestens ein Quarzglasrohling (4, 5) in einer zugehörigen Bauteilform (2, 3) 50 bis 170 K über seinen Softening Point erhitzt und mit einer Druckvorrichtung (7) einen Druck von 10 bis 500 kPa auf seine Oberfläche (11, 12) ausgeübt wird, **dadurch gekennzeichnet, dass** die Druckvorrichtung (7) Führungsständer (9, 10) aufweist, die sich außerhalb der Bauteilform (2, 3) befinden und entlang denen eine Druckplatte (8) bewegbar angeordnet ist, auf der ein Druckmittel (14,19) lastet, dass die Druckplatte (8) gegen die obere Deckfläche (11, 12) des Quarzglasrohlings (4, 5) drückt, so dass dieser in eine durch die Bauteilform (2, 3) gegebene Form gepresst wird.

2. Vorrichtung gemäß Anspruch 1, **dadurch gekennzeichnet, dass** sich im Ofen (1) gleichzeitig mehrere Bauteilformen (2, 3) befinden.

3. Vorrichtung gemäß Anspruch 1, **dadurch gekennzeichnet, dass** die Führungsständer (9, 10) auf einer Grundplatte (6) befestigt sind, auf der zwischen den Führungsständern (9, 10) sich die Bauteilformen (2, 3) befinden.

4. Vorrichtung gemäß Anspruch 1, **dadurch gekennzeichnet, dass** das Druckmittel (19) außerhalb des Ofens (1) angeordnet ist und über Verbindungsmittel (16) auf die Druckplatte (8) einwirkt.

5. Vorrichtung gemäß Anspruch 1, **dadurch gekennzeichnet, dass** das Druckmittel (14) auswechselbar angeordnet ist.

6. Vorrichtung gemäß Anspruch 1, **dadurch gekennzeichnet, dass** die untere Fläche (13) der Druckplatte (8) und/oder die untere Innenfläche der Bauteilform (2, 3) gekrümmt gestaltet sind.

7. Verwendung der Vorrichtung gemäß mindestens einem der Ansprüche 1 bis 6 zur Herstellung einer Quarzglasplatte deren Kantenlängen bzw. Durchmesser mindestens 500 mm betragen.

## Claims

1. Apparatus for manufacturing large-volume optical elements of high optical quality from synthetic quartz glass blocks in which at least one quartz glass block (4, 5) placed in an appropriate element mold (2, 3) is heated to 50 - 170 K above its softening point in a furnace (1) with inert gas atmosphere and its surface (11, 12) is subject to a pressure in the range of between 10 and 500 kPascal generated by a pressing device (7), wherein said pressing device (7) is provided with guide supports (9, 10) located outside the element mold (2, 3) and a pressing element (14, 19) weighs on a freely moving pressure plate (8) that is arranged along said supports (9, 10) so that said pressure plate (8) presses onto the upper surface (11, 12) of the quartz glass block (4, 5) in such a way that said block (4, 5) is pressed through a mold that is determined by the element mold (2, 3).

2. Apparatus according to claim 1, wherein several element molds (2, 3) are positioned in the furnace (1) at the same time.

3. Apparatus according to claim 1, wherein the guide supports (9, 10) are mounted at a base plate (6) on which the element molds (2, 3) are located between said guide supports (9, 10).

4. Apparatus according to claim 1, wherein the pressing element (19) is arranged outside the furnace (1) and applies forces onto the pressure plate (8) via linking elements (16).

5. Apparatus according to claim 1, wherein the pressing weight (14) is arranged in such a way that it can be replaced.

6. Apparatus according to claim 1, wherein the bottom surface (13) of the pressure plate (8) and/or the bottom inner surface of the element mold (2, 3) have/has a curved design.

7. Use of the apparatus according to at least one of the claims 1 to 6 for manufacturing a quartz glass plate the edge lengths or diameters of which are at least 500 mm.

## Revendications

1. L'appareil pour la fabrication d'éléments optiques de grand volume et de haute qualité optique fabriqués à partir d'ébauches en verre de silice synthétique, permettant de chauffer, dans un four (1) doté d'une atmosphère contrôlée, au moins une ébauche en verre de silice (4, 5) dans une matrice femelle pour procéder au formage des éléments optiques (2, 3) afin de la porter à une température supérieure à 50 à 170 K, et équipé d'un dispositif de compression (7) exerçant une pression de 10 à 500 kPa sur la face de couverture supérieure (11, 12) est **caractérisé en ce que** le dispositif de compression (7) comprend des colonnes de guidage (9, 10) placées en dehors des matrices femelles pour formage des éléments optiques (2, 3), sur lesquelles est disposé de manière mobile un dispositif de compression (8) pouvant se déplacer le long des guidages, sur lequel agit, de par son poids, une charge de compression (14, 19) qui comprime le dispositif de compression (8) contre la face de couverture supérieure (11, 12) de l'ébauche en verre de silice (4, 5) de manière à ce que celle-ci soit enfoncée dans la matrice femelle de formage des éléments optiques (2, 3) afin qu'elle prenne sa forme requise.

2. L'appareil suivant la revendication 1 est **caractérisé en ce que** se trouvent simultanément dans le four (1) plusieurs matrices femelles pour formage des éléments optiques (2, 3).

3. L'appareil suivant la revendication 1 est **caractérisé en ce que** les colonnes de guidage (9, 10) sont fixées sur une plaque d'assise (6) sur laquelle sont montées, entre les colonnes de guidage (9, 10), les matrices femelles pour formage des éléments optiques (2, 3).

4. L'appareil suivant la revendication 1 est **caractérisé en ce que** le poids de compression (19) est disposé en dehors du four (1) et agit sur la plaque de compression (8) par l'intermédiaire des pièces de liaison (16).

5. L'appareil suivant la revendication 1 est **caractérisé en ce que** le poids de compression (14) monté est interchangeable.

6. L'appareil suivant la revendication 1 est **caractérisé en ce que** la face inférieure (13) de la plaque de compression (8) et/ou la face intérieure inférieure des matrices femelles pour formage des éléments optiques (2, 3) présentent une forme courbe.

7. Application du présent appareil suivant au moins une des revendications 1 à 6 pour la fabrication d'une feuille en verre de silice dont les côtés ou les diamètres ont une longueur d'au moins 500 mm.
